# EUROPEAN PATENT APPLICATION

(11) **EP 3 950 796 A1**
(43) Date of publication of application: **09.02.2022**
(21) Application number: 21190121.0
(22) Date of filing: 06.08.2021
(51) Int. Cl.: C08J 11/02, C08J 11/08, B29B 17/02, B29C 48/69

(54) **METHOD FOR SOLVENT REMOVAL FROM A POLYMER SOLUTION BY INTEGRATED SIZE CLASSIFICATION AND EXTRUSION IN A PLASTIC EXTRUDER**

(30) Priority: 07.08.2020 EP 20190050
(71) Applicant: APK AG, 06217 Merseburg (DE)
(72) Inventor: HANEL, Hagen, 04103 Leipzig (DE); WOHNIG, Klaus, 14052 Berlin (DE)
(74) Representative: Kilger, Ute

(57) **Abstract**

The invention relates to a continuous method for removing a solvent from a suspension or solution comprising a target polymer, wherein the method comprises the steps of delivering said suspension or solution to an extruder, wherein said extruder comprises a size classification unit that is designed to be permeable for the solvent and impermeable for the target polymer; and filtration and extrusion of said suspension or solution in said extruder. The invention also relates to a plastic waste recycling system for recycling a target polymer. Furthermore, the invention also relates to a polymer material obtained by this recycling method.

## Description

### Technical Field

The present invention relates to a continuous method for removing a solvent from a suspension or solution comprising a dissolved target polymer by integrated size classification and extrusion of said suspension or solution comprising the dissolved target polymer. The present invention also relates to a method for solvent-based recycling of a plastic material comprising at least one target polymer, comprising the integrated size classification and extrusion step. The invention also relates to a plastic waste recycling system for recycling a target polymer. Furthermore, the invention also relates to a polymer material obtained by this recycling method.

### Background of the Invention

It is well known that plastic has an impact on the environment, largely because plastic is in general not biodegradable. Each year, millions of tons of plastic objects, such as plastic bags, pellets and plastic bottles, end up in the water, including oceans, and accumulate over time. Onshore plastic waste can be found even in the most remote regions. Plastic objects decompose very slowly and eventually form microplastics that may be sized in the submicrometer range, further facilitating widespread plastic pollution, and thus representing a serious environmental problem. Toxic chemicals, such as DDT (Dichlorodiphenyltrichloroethane) and BPA (Bisphenol A) have been found to adhere to microplastics, thus facilitating the spread of such toxic chemicals via the spread of microplastics. Plastic waste, in particular in the form of microplastics, represents a potential danger to animal life and to humans when inadvertently consumed as part of natural diet, comprising the consumption of meat and fish.

Plastic recycling offers a sustainable way of controlling the amount of plastic in circulation, and reducing the amount of plastic waste that is effectively produced and released into the environment. For this purpose, various mechanisms of recycling plastic waste have been developed over time.

EP 0 359 106 A2 discloses a method of cleaning and recycling polluted plastics. In a closed system chips of plastic are washed in a washing solution and different types of plastic are separated. Then, the chips to be recycled are dried in a downstream stage. The discharge of harmful fumes is avoided and the solvent is treated and returned to the cycle.

DE 44 14 750 A1 relates to a process and an apparatus for cleaning viscose polymer melts possibly contaminated with paper, the impurities being segregated from the polymer melt by centrifuging.

DE 198 18 183 C2 relates to a method for separating the components of a product containing at least two plastic substances or a plastic substance and a metal substance. The product is heated to a softening temperature of a plastic substance, centrifuged at that temperature in the rotor of a centrifuge and then the plastic substance is disposed of separately.

EP 0 894 818 A discloses a process for the reclamation of soluble polymer or polymer mixtures from waste materials wherein (i) the polymer or polymer mixture is selectively dissolved from the polymeric material; (ii) unwanted insoluble components are optionally removed from the resulting solution; (iii) unwanted soluble components are optionally removed from solution; (iv) the polymer or polymer mixture is selectively precipitated by means of turbulent mixing with a precipitating agent in the presence of a gas or gas mixture; (v) separation of the precipitated polymer or polymer mixture from the liquid phase; and (vi) optionally drying the polymer or polymer mixture. Preferably further soluble polymer or mixture is dissolved from the separated insoluble components after separation from the resulting suspension and/or the insoluble components undergo a final water washing step. The polymer solution undergoes a chromatographic, preferably a gel permeation chromatography and/or solid phase extraction, preferably with carbon and/or a liquid-liquid extraction step.

DE 40 33 604 A1 relates to a recovery of soluble plastics from waste, wherein the plastic to be recovered is selectively dissolved out of the plastic-containing waste by suitable solvents. The thus obtained solution is injected into a container filled with a medium which is a non-solvent for the plastic. The temperature of this medium must in this case be above the boiling point of the solvent in which the plastic was dissolved. As a result, the solvent evaporates and the plastic to be recovered is released. The evaporated solvent is recovered. The precipitation of the plastic shall be quantitative in that one injects the plastic solution in a very high excess of a non-solvent for this plastic.

WO 2018/114046 A1 discloses a centrifuge for separating at least one solid from a waste material suspension, the suspension comprising the solid and a polymer solution with at least one solvent and at least one plastic dissolved therein.

US 2007/0265361 A1 relates to a method for recycling polyesters or polyester mixtures from polyester-containing waste, in which the polyester or the polyester mixture is dissolved in a solvent and subsequently free-flowing particles are precipitated therefrom with a precipitant. The precipitant is chosen such that subsequent separation of precipitant and solvent is made possible in a simple manner.

US 2008/0281002 A1 relates to a method for recycling plastic materials which contain at least two polymers, copolymers or blends thereof based on polystyrene. The plastic material is thereby mixed with a solvent for the polymers, copolymers or blends. Subsequently a precipitation is effected by addition of a corresponding precipitant so that then the gelatinous precipitation product can be separated from the further components of the plastic material. The method is used for recycling of any plastic materials, in particular of plastic materials from electronic scrap processing and from shredder light fractions.

WO 2011/082802 A1 relates to a method of recycling waste material comprising at least one polymer and at least one material to be separated, in which a) at least one swelling agent is added to form a polymer gel, and b) at least one insoluble impurity is separated from the polymer gel by means of filtration or sedimentation.

WO 1993/001036 A1 discloses a method of processing polyolefin waste material, wherein extraction is used to remove the foil ingredients and polyethylene waxes without dissolving the plastic material.

WO 2017/003804 A1 discloses a process for purifying polyethylene, wherein impurities from the polymer matrix are removed via extraction without dissolving the plastic material.

US 5,043,421 discloses solvent removal from solutions comprising polymers in an extruder by addition of at least one non-solvent during extrusion.

DE 10 2013 210 110 A1 discloses a method comprising the enrichment of a polylactide from waste comprising a polylactide, wherein the polylactide is in solution, and wherein the solvent is at least partially removed by use of a degassing extruder.

WO 1999/043744 A1 discloses the recovery of substantially pure polymers from aqueous solutions. A membrane filtration step is used in said method for the purpose of removing impurities, such as certain salts and/or metals.

WO 2012/117250A1 discloses a recycling process for obtaining polypropylene, comprising a decontamination process, and extrusion of dissolved target polymer in an extruder, wherein the solvent is at least partially removed by use of evaporation in a vacuum in the extruder, as well as heating.

PL 422956 discloses recycling of polyethylene film waste, which comprises filtration of dissolved polymers through a filter of 1 to 3 µm accuracy for impurity removal and transfer of the filtered solution to a second compartment, where the solution is partially evaporated and wherein the concentrated solution is then transferred to a planetary extruder, in which the solvent is completely removed.

Some of the recycling techniques described above shred particles and immediately melt them for extrusion. However, this requires waste material of a high purity or results in polymer pellets and polymer products of low quality.

Other recycling techniques are solvent-based methods, wherein the target polymer is transferred to a solution. An advantage of this method is that isolation of a target polymer is mostly easier if plastic waste is transferred into a solution or suspension. However, in addition to the target polymer numerous undesired impurities are transferred to the solution as well. When the polymer solution is concentrated and the solvent is removed, e. g. through evaporation and/or extrusion, the impurities still remain in the mixture together with the target polymer. Consequently, the resulting recycled polymer material, e.g. obtained in a form of pellets or granulates, will contain these impurities. The quality of such contaminated material is subsequently lower compared to a virgin polymer, which restricts its further applications. For example, recycled polymeric materials containing toxic levels of impurities cannot be used for packaging food.

In addition, recycled polymeric materials that contain impurities may have reduced stability as compared to virgin level polymeric materials, and are thus less suitable for use in products and/or applications requiring stable and/or durable polymeric materials, such as in manufacturing or construction industries. Another problem may be that the plastic material containing the impurities may be unsuitable for enclosing sterile items or volumes, such as in the biomedical and/or chemical industries or sectors. For example, single-use sterile syringes may not be packaged with plastic material that may be compromised due to said impurities compromising sterility and/or safety of the syringes with polymeric packaging material comprising said impurities.

Some of the methods of the prior art try to solve the impurity issue by means of washing the plastic material with a liquid or by using solid-liquid extraction in order to reduce the content of impurities prior to the dissolution step. However, such methods are not able to provide sufficient levels of essentially impurity-free plastic material. Extractants in washing or solid-liquid extraction of plastic material may be used to remove undesired components. Extractants used in such methods need to penetrate into a polymer matrix, which can easily be achieved at the surface regions of the polymer, but is more complicated for the parts that are less exposed to solvents. As a result, mainly the surface area impurities are removed by such extraction or solid-liquid extraction methods, whereas the less solvent-accessible parts of the polymer matrix still contain a significant amount of impurities. Even if a fully dissolved polymer may be subjected to extraction for impurity removal, the extraction itself may not be sufficient for removal of most impurities as these may not all be targeted by the same extractant, or an economically sustainable selection of simultaneous or subsequent extraction steps using a plurality of extractants.

The recovery of dissolved target polymers from a solution may represent a challenge in itself. Solvents may be removed by evaporation or precipitation for retrieval of target polymer. However, said evaporation or precipitation processes may consume a lot of energy, and therefore may not be sustainable and/or economically favorable, and thus unlikely to contribute to the reduction of plastic waste through sustainable recycling methods. In addition, sustained or excessive heating may also destabilize the target polymers.

Another problem with solvent removal by evaporation or precipitation of the target polymer may be that impurities are not, or at least insufficiently removed. However, in the final plastic material impurities should not exceed a proportion of 3 wt%.

For example, small molecule impurities that are insufficiently removed during recycling may be small molecules that have a high boiling point and, depending on the recycling method, may not be removed, due to insufficient evaporation temperature.

If polymers are produced by *de novo* polymerization reactions, the removal of solvent and impurities can be a challenge in view of the above problems associated with prior art as well. For example, polymerization reaction additives, or incompletely polymerized molecules of low molecular weight may be considered as impurities and may have to be removed for improving the quality of the resulting polymer.

Considering the worldwide production of several hundred million tons of plastic each year, even small energy reductions in the recycling process may thus have a large impact and lead to substantially increased recycling efficiency and/or throughput, and sustainability of recycling methods.

Even if an essentially pure polymer is obtained, either by recycling or *de novo* polymerization, pure polymers alone can often demonstrate poor resistance to external factors, comprising extreme temperatures or mechanical stress, during their processing or end-use application. That is why some polymer recycling approaches include that in order to improve stability, process-ability of polymers, and enhancing the service life of the polymer product, certain additives, or stabilizers, may be added to the polymer matrix.

Polymer additives can be classified as polymer stabilizers or functional agents. Polymer stabilizers are essential to practical use, because they help to maintain the inherent properties and other characteristics of plastic material by suppressing the oxidative degradation promoted by high temperature and ultraviolet exposure during use. Functional additives are added to enhance the mechanical strength of plastics or impart new functional properties, such as flexibility or flame retardancy, hence expanding the scope of application of plastics and increasing their commercial value.

Post-consumer plastic is often unusable in the form in which it arises or is collected. One of the main problems in post-consumer plastics recycling is degradation of polymers during their lifetime. In order to ensure that a recycled material may possess the necessary quality to guarantee long-term stability for the intended application, addition of certain chemicals is often necessary. There is a variety of additives available for this purpose, e.g. antioxidants, light stabilizers, color hold agents, etc.

Known recycling techniques that include addition of such stabilizers or additives attempt to diminish negative effects of polymer degradation by addition of said stabilizers or additives. However, these restabilization techniques often lack to achieve uniform distribution of solid additives in the polymer matrix, and thus the final recycled product may contain regions with different concentrations of said additives. In the case of non-uniform distribution of stabilizers, some regions may be over-saturated with the stabilizers, whereas other regions may have insufficient quantities of the additives. Consequently, some parts of the recycled plastic material are potentially more susceptible to oxidative degradation promoted by high temperatures and UV-irradiation than others. The problem of non-uniform stabilizer distribution may be solved by adding the additives in higher quantities so that every region of the recycled product would contain a sufficient quantity to ensure long-term stability for the intended application. However, this approach inevitably increases the costs of the recycling process and may make the related recycling process unsustainable. In addition, while higher quantities of such stabilizers may improve the stability of the recycled product, such high quantities of stabilizer may have a negative impact on mechanical properties of polymers, for example if the additives or stabilizers interfere with the polymer matrix to the extent that alignment of the molecular chains to build a regular structure of polymer chains is hindered. Also, some additives may be hazardous in higher quantities and their use may thus not be possible.

Importantly, such additives or stabilizers can also be considered as impurities in a plastic recycling process comprising a target polymer, wherein said additives or stabilizers may be incompatible with downstream applications or use of the recycled products comprising the target polymer, or wherein alternative additives or stabilizers may be added. For example, some additives or stabilizers frequently found in plastic material to be recycled may be chemically incompatible with certain other additives or stabilizers that may be selected in a particular recycling process in order to obtain a particular polymer product. Another issue is that if not removed from the recycling pipeline, such additives or stabilizers may degrade after several rounds of recycling, thus compromising the quality of recycling products. Furthermore, the accumulation of additives or stabilizers with potentially very distinct physical and/or chemical properties, especially after several rounds of recycling, makes impurity removal increasingly difficult, especially if using more selective methods, such as evaporation by heat, which may conflict with the requirement of keeping the evaporation temperature as low as possible in order to prevent or reduce polymer disintegration, especially if the additives present in the solution comprising the target polymer, are unknown. At present, the plastic recycling methods of the prior art do not provide an efficient, sustainable and low energy method for impurity removal and/or solvent removal that would lead to the provision of high quality, virgin-like polymers.

The present invention comprises a method of solvent and/or impurity removal using size classification of the dissolved target polymer in combination with extrusion in a plastic extruder. This integrated method of solvent and/or impurity removal from a dissolved target polymer simultaneously increases the energy and impurity removal efficiency of the solvent and and/or impurity removal process, whilst further also providing an improved method for integration into a sustainable recycling process for obtaining a virgin-like polymer. The aspect of integrated impurity and/or solvent removal and extrusion improving the overall efficiency and sustainability of plastic recycling methods is a very important aspect of the present invention.

The present invention provides an improved method of solvent and/or impurity removal from a solution or suspension comprising a dissolved target polymer, in comparison to the prior art, by having a reduced number of steps required to retrieve a pure solid form of the target polymer from the polymer solution or suspension, wherein solvent and/or impurity removal is performed by size classification in combination with extrusion of a dissolved target polymer in a solution or suspension, thus forming a single, integrated step comprising extrusion and solvent and/or impurity removal, thereby also limiting the requirement for potentially destructive solvent and/or impurity removal methods, such as evaporation by heating. The present invention further provides a more sustainable recycling process through integration of the extrusion and solvent and/or impurity removal method into a full recycling process, and thus a method for obtaining an at least virgin-like polymer.

The integrated step of solvent and/or impurity removal and extrusion is performed with an extruder by size classification of a solution comprising the dissolved target polymer in said extruder, and may further comprise degassing of the dissolved target polymer, wherein if the dissolved target polymer is derived from plastic waste, said integrated step of extrusion and solvent and/or impurity removal allows for the provision of a recycled at least virgin-like, preferably virgin-grade target polymer product and the provision of a surprisingly energy-efficient and sustainable method of plastic recycling.

The invention further provides a method of extrusion and solvent and/or impurity removal, optionally degassing with a degassing extruder, that can by continuously integrated into a complete plastic recycling process, thus greatly improving efficiency, speed and sustainability of solvent-based recycling processes, wherein a completely continuous recycling process is enabled.

### Detailed Description of the Invention

It is an object of the present invention to provide an improved method, particularly a continuous method, for solvent and/or impurity removal from a suspension or solution comprising a dissolved target polymer, particularly a dissolved thermoplastic target polymer by size classification of a target polymer that is in a suspension or solution, comprising size classification of a target polymer in a suspension or solution with a membrane and/or sieve.

The size classification of a target polymer that is in a suspension or solution may be complemented with degassing, wherein optionally degassing is performed with a degassing extruder, thereby obtaining an essentially degassed plastic material comprising the target polymer, wherein essentially degassed means that ≤ 1 wt% (≤ 10000 ppm), preferably ≤ 0.1 wt% (≤ 1000 ppm) of solvent is present after complete degassing.

The method enables solvent and/or impurity removal from a suspension or solution comprising the target polymer by at least reducing the need for heat-induced solvent evaporation, thereby reducing the loss of target polymer through decomposition of polymers by thermal instability that would occur if solvent removal were exclusively or largely conducted by heat-induced evaporation, for example at temperatures above 180°C. The method further improves the efficiency of impurity removal from a suspension or solution comprising the target polymer by performing either size classification of dissolved target polymers or solvent evaporation, that may or may not be heat-induced, or combinations thereof.

It is a further object of the present invention to integrate the step of solvent removal from a suspension or solution comprising a dissolved target polymer by size classification, comprising size classification with a membrane or sieve, with extrusion using an extruder and/or degassing with a degassing extruder, thereby forming an integrated, single step comprising size classification and extrusion, and optionally degassing with a degassing device comprising a degassing extruder, wherein the size classification unit, comprising membrane or sieve size classification, is an integral part of the extruder, optionally wherein the degassing device comprising a degassing extruder is an integral part of the extruder with size classification unit, thus providing a continuous method effectively supplanting the need for separate machines or stations during the single, integrated step comprising size classification, extrusion and optionally degassing with a degassing extruder, respectively. It is also subject of the present invention to provide an improved method of solvent and/or impurity removal from a suspension or solution comprising a dissolved target polymer, for integration into a complete plastic recycling process, thereby improving the overall energy efficiency of the complete plastic recycling process, and thus running costs, which in turn may also increase recycling throughput. It is also an object of the present invention to provide an improved plastic waste recycling system for recycling plastic waste comprising a target polymer. Such an improved plastic waste recycling system comprises a plastic recycling plant with multiple processing stations, wherein the solvent removal station or integrated solvent removal step is according to the subject matter of the present invention. The quality of the plastic material thus obtained is at least comparable to virgin polymers, or a virgin-like polymer.

Hence, provided is a continuous method for removing a solvent from a suspension or solution comprising a target polymer, wherein the method comprises the following steps:
(i) delivering said suspension or solution to an extruder, wherein said extruder comprises a size classification unit that is designed to be permeable for the solvent and impermeable for the target polymer; and
(ii) filtration and extrusion of said suspension or solution in said extruder.

In one embodiment, the polymer suspension or solution is provided to at least one of the following steps before step (i):
A. purifying the suspension or solution comprising the target polymer, in particular by means of mechanical solid-liquid separation, optionally using a centrifuge, thereby obtaining a purified suspension or solution comprising the target polymer;
B. optionally applying: a.) flash-evaporation, or b.) precipitation and mechanical solid-liquid separation, of the purified suspension or solution comprising the target polymer;

It was surprisingly discovered that integration of a size classification step, comprising filtration with a membrane or sieve, with an extrusion step, and/or a degassing step optionally using a degassing extruder , as part of a process of solvent-based recycling of plastics enables the sustainable provision of a target polymer with virgin-like quality.

It was furthermore surprisingly discovered that integrating a size classification step comprising filtration with a membrane or sieve, with an extrusion step, and/or a degassing step optionally comprising a degassing extruder, reduces energy consumption and/or duration of the recycling process such that the resulting overall recycling process allows a higher throughput of recycled plastic, thus allowing more efficient plastic recycling, which in turn more efficiently addresses the problem of plastic pollution. The integration of both extrusion and size classification, optionally combined with degassing, substantially reduces running time and costs, while maximizing the efficiency of solvent removal and minimizing the need of solvent evaporation, especially if the high pressure of the extruder is used to drive size classification.

The above steps i) to ii) and A) to B) do not necessarily signify a specific sequence or number of steps. However, preferably the steps of the method are implemented with ascending numbers and/or in alphabetical order, i.e. in the order as shown above. Some of said steps may be optional and in some embodiments optional steps are not implemented.

In one embodiment, step i) is preceded by dissolving at least part of the target polymer. According to some embodiments, adding a solvent or a mixture of solvents to plastic material comprising the target polymer in order to obtain a solution or suspension comprising said target polymer is achieved by dissolving the target polymer at an elevated temperature. In one embodiment, said elevated temperature may be above room or ambient temperature.

In one embodiment, the size classification unit is a membrane or sieve. In one embodiment, the size classification unit is either a membrane or a sieve, or a combination thereof.

In one embodiment, the extruder further comprises a degassing unit. In one embodiment the degassing unit is used for essentially complete degassing of the target polymer in solution or suspension, wherein essentially complete degassing means ≤ 1 wt% (≤ 10000 ppm), preferably ≤ 0.1 wt% (≤ 1000 ppm) of solvent is present after complete degassing.

In one embodiment, size classification, in particular filtration of said suspension or solution is performed during extrusion and/or degassing in said extruder comprising the classification unit. In one embodiment, filtration of said suspension or solution is performed during extrusion, wherein optionally degassing with a degassing extruder is performed after filtration.

In one embodiment, the size classification unit forms part of the extruder, optionally further comprising a degassing unit.

In one embodiment, the extruder comprises an inner and an outer enclosure, wherein the inner enclosure further comprises the size classification unit that is impermeable to the target polymer and therefore allows the solvent to exit the inner enclosure and the target polymer to remain inside the inner enclosure, thereby allowing filtration of the suspension or solution through said size classification unit in the extruder. In one embodiment, impurities may also exit the inner enclosure through the size classification unit of the extruder.

In one embodiment, the extruder is a screw extruder with at least one screw enclosed by the inner enclosure, wherein the spatial clearance between the inner enclosure comprising the size classification unit and the at least one screw of the screw extruder allows a spatial clearance-to-screw diameter ratio of at least >0.02 %, preferably >0.2%, most preferred >2%.

In one embodiment, the inner enclosure of the extruder comprising the size classification unit encloses a volume of at least 0.01 m³, preferably up to 1.0 m³. In some embodiments, the inner enclosure of the extruder comprising the size classification unit is rectangular. Generally, the sizes (volumes) of extruders, und thus their geometry, may vary to a large extent.

In one embodiment, the inner enclosure of the extruder comprising the size classification unit is at least partially covered or formed by the size classification unit, wherein the size classification unit is covering or forming at least 80%, preferably at least 90%, most preferred up to 100% of the surface area of the inner enclosure of the extruder. In another embodiment, the inner enclosure of the extruder is not covered or formed by the size classification unit, wherein the size classification unit forms or covers less than 80% of the surface area of the inner enclosure of the extruder, particularly less than 70%, more particularly less than 60%, more particularly less than 50%, more particularly less than 40%, more particularly less than 30%, more particularly less than 20%, more particularly less than 10%, more particularly less than 5%, more particularly less than 1% of the surface area of the inner enclosure of the extruder comprising the size classification unit. In some embodiments the inner enclosure of the size classification unit comprises a multitude of tubes, in particular tubes that are installed in parallel.

In one embodiment, size classification unit may form a tube. In one embodiment, the size classification unit is a membrane that may form a tube. In some embodiments the membrane is coiled to form a tube.

In one embodiment, the extruder comprising the size classification unit is continuous with a solution or suspension provision unit through an inlet opening of the extruder comprising the size classification unit. In another embodiment, the extruder comprising the size classification unit is continuous with a polymer retrieval unit through an outlet opening of the extruder comprising a size classification unit. In yet another embodiment, the extruder comprising the size classification unit is continuous with both a solution or suspension provision and a polymer retrieval unit, through an inlet and outlet opening, respectively.

In one embodiment, up to 5%, preferably up to 10%, more preferably up to 20%, more preferably up to 30%, more preferably up to 40%, even more preferably up to 50%, most preferably up to 60% of solvent is removed from said solution or suspension.

In one embodiment, the size classification unit is a membrane or sieve, wherein the membrane or sieve is designed to be impermeable for target polymers with an average molecular mass of 1000 kDa or more, in particular target polymers with an average molecular mass of 500 kDa or more, in particular preferred target polymers with an average molecular mass of 200 kDa or more. In one embodiment, the membrane or sieve is designed to be impermeable for target polymers with an average molecular mass of 100 kDa or more.

Preferably, the size classification or filtration, comprising sieving or membrane filtration, uses micro-, ultra- and/or nanofiltration, in particularmicrofiltration. Preferably the pore size of filtration corresponds to a molecular weight cut-off in a range of 10 kDa to 500 kDa, in particular 100 kDa to 300 kDa, in particular for the used solvent. Also, combinations are preferred in some embodiments, e.g. a pre-treatment by a first filter having a first pore size and a subsequent second filter having a second pore size was found to be suitable.

In some embodiments the size classification unit comprises a membrane that forms a multi-layered membrane wall, in particular with at least two, at least three or at least four layers of membrane. In some embodiments, the size classification unit is a multilayered sieve, in particular with at least two, at least three or at least four layers of sieve. In some embodiments, the multilayered sieve or membrane has a gradually decreasing cut-off size in the flow direction of the solvent.

In one embodiment, the size classification unit is a membrane, and wherein the membrane material is selected from a group consisting of polyamide membrane, polyvinylidene difluoride membrane, polyethersulfone membrane, polysulfone membrane, polydimethylsiloxane membrane, polypropylene membrane, or a combination thereof.

In some embodiments the membrane is an inorganic membrane, in particular a ceramic membrane.

In some embodiments the membrane is an organic membrane, in particular an organic membrane that is selected from a group consisting of polyamide membrane, polyvinylidene difluoride membrane, polyethersulfone membrane, polysulfone membrane, polydimethylsiloxane membrane, polypropylene membrane. The organic membrane should be made from or comprise a polymer that does not dissolve in the solvent that is selected to implement the method, i.e. the choice of membrane depends on the selected solvent. If the target polymer is low-density polyethylene (LDPE) and/or the solvent is heptane, polyvinylidene difluoride membranes were found to be particularly suitable. If the target polymer is low-density polyethylene (LDPE) and/or the solvent is heptane, polyamide membranes were also found to be particularly suitable. Also mixtures of polyamide and polyvinylidene difluoride may be used for membranes for low-density polyethylene (LDPE) with heptane as a solvent. If the target polymer is polypropylene and/or the solvent is octane, polysulfone membranes were found to be particularly suitable. If the thermoplastic target polymer is polyamide (PA), in particular polycaprolactam (PA6), and/or the solvent is propylene glycol, polypropylene membranes were found to be particularly suitable. If the thermoplastic target polymer is polyvinyl chloride (PVC) and/or the solvent is acetone, polypropylene membranes were again found to be particularly suitable.

In some embodiments the membrane, in particular one of the above named membranes, is chemically modified to have an increased polarity.

The membrane is preferably a solvent permeable porous membrane with respect to said solvent for the thermoplastic target polymer. Preferably the pore sizes are in the range of 0. 1 to 0.001 microns.

In some embodiments the membrane is designed for retaining a thermoplastic target polymer with a molecular weight cut-off selected from a range of 10 kDa to 2000 KDa, in particular of 100 kDa to 1000 kDa, wherein molecules with a weight that is higher than a selected weight from said ranges do not pass the membrane, in particular when said molecule is within the solvent, preferably dissolved in said solvent. In a preferred embodiment, impurities are not retained by the membrane, wherein impurity refers to any molecules different from the target polymer or plurality of target polymers.

In some embodiments the membrane is permeable for molecules with a molecular weight of 0.1 kDa. In some embodiments the membrane is permeable for molecules with a molecular weight of 1 kDa. Although solvents usually have a much lower molecular weight, it was found that it is advantageous, when the membrane has pores that are significantly larger than the solvent molecules.

In one embodiment, the size classification unit is a sieve, wherein the sieve is made of material comprising metal and/or ceramics.

In one embodiment, the sieve is a motorized sieve. The motorized sieve may be moved circularly or circularly, or by combinations or circular and linear movement.

In one embodiment, the filtration is driven by a pressure differential across the size classification unit, wherein the pressure differential is > 30 bar, preferably > 50 bar, most preferred > 100 bar.

In one embodiment, the pressure differential is achieved by a vacuum pumping system aided with heating, wherein heating refers to a temperature not exceeding a maximal temperature of 5K, particularly 10K below the boiling point of the solvent, or the solvent with the lowest boiling point in a mixture of solvents.

In one embodiment, the plastic waste comprising the target polymer is at least partially dissolved in the solvent, in particular using an agitator and/or a heating system, wherein heating refers to a temperature not exceeding a maximal temperature of 5K, particularly 10K below the boiling point of the solvent, or the solvent with the lowest boiling point in a mixture of solvents.

In one embodiment, the method for at least partially removing a solvent is for recycling plastic waste comprising a target polymer, and the plastic waste is at least partially dissolved in the solvent, in particular using an agitator and/or a heating system, wherein heating refers to a temperature not exceeding a maximal temperature of 5K, particularly 10K below the boiling point of the solvent, or the solvent with the lowest boiling point in a mixture of solvents.

In one embodiment, the method for at least partially removing a solvent is for recycling plastic waste comprising a target polymer, wherein the target polymer is at least partially dissolved in the solvent, in particular using an agitator and/or a heating system, wherein heating refers to a temperature not exceeding a maximal temperature of 5K, particularly 10K below the boiling point of the solvent, or the solvent with the lowest boiling point in a mixture of solvents. In another embodiment, the method for at least partially removing a solvent is for integration into a solvent-based recycling process. The solvent-based recycling process preferably is a continuous solvent-based recycling process.

According to some embodiments adding a solvent or a mixture of solvents to said plastic material to obtain a solution or suspension comprising said target polymer comprises dissolving said target polymer at least partially in said solvent or said mixture of solvents in a, in particular closed and/or gastight, vessel comprising the solvent, wherein an agitator for stirring the suspension or solution is provided. The agitator may be connected to said vessel and/or it may be disposed in said vessel. It is in some embodiments possible to dispose the agitator within the vessel without connection to the vessel, e.g. by hanging the agitator into the vessel from above. However, often the agitator is connected to the, in particular closed and/or gastight, vessel. The suspension or solution is preferably stirred for at least 15 min, in particular for at least 30 min. Preferably, the suspension or solution is stirred for less than 6 h, in particular for less than 2 h (120 min). It was found that stirring expedites dissolving the target polymer in the solvent.

In one embodiment, the target polymer is at least partially dissolved in the solvent at a temperature that is lower by more than 5 K, in particular by more than 10 K than the boiling point of said solvent, or the solvent with the lowest boiling point in a mixture of solvents.

In some embodiments the target polymer is a thermoplastic polymer. In some embodiments, the target polymer is derived from plastic material selected from the group comprising post-consumer use polymers, post-industrial use polymers and combinations thereof.

In some embodiments said thermoplastic polymer is selected from the group comprising polyolefins, polyamide (PA) and combinations thereof.

In some embodiments the target polymer is selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). A particularly suitable target polymer is polyethylene (PE), in particular low-density polyethylene (LDPE) and/or high-density polyethylene (HDPE), Polyvinylfluoride (PVF).

In some embodiments the target polymer is selected from the group comprising polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). A particularly suitable target polymer is polyethylene (PE), in particular low-density polyethylene (LDPE) and/or high-density polyethylene (HDPE). The method was found to be particularly suitable for recycling low-density polyethylene (LDPE).

In one embodiment, the target polymer is a polyolefin. In one embodiment, the target polymer is low-density polyethylene (LDPE). In one embodiment, the target polymer is polypropylene (PP). In one embodiment, the target polymer is polyamide (PA).

The suspension or solution preferably comprises one or more at least partially dissolved thermoplastic target polymers selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). Polyethylene (PE) is preferably selected from high-density polyethylene (HDPE) and low-density polyethylene (LDPE) or contains both. The method was found to be particularly suitable for recycling polyethylene (PE), in particular low-density polyethylene (LDPE).

In some embodiments the target polymer has an average molecular mass of 50 to 20000 kDa, in particular of 100 to 4000 kDa, in particular preferred of 200 to 2000 kDa. In some embodiments the target polymer has a number average molecular weight of 50 to 20000 kDa, in particular of 100 to 4000 kDa, in particular preferred of 200 to 2000 kDa.

In one embodiment, the solvent or mixture of solvents in which the target polymer is dissolved, form a solution or suspension that is saturated with the dissolved target polymer.

In some embodiments the target polymer is dissolved in said solvent or said mixture of solvents in an amount not less than 5 wt%, more preferably not less than 7 wt%, in particular not less than 10 wt%, with respect to the total weight of said solvent or mixture of solvents and the polymer that is dissolved.

In some embodiments the target polymer is dissolved in said solvent or said mixture of solvents in an amount not less than 5 wt%, more preferably not less than 7 wt%, in particular not less than 10 wt%, with respect to the total weight of said solvent or mixture of solvents and the polymer that is dissolved, wherein said solvent or mixture of solvents in which the target polymer is dissolved, form a solution or suspension that is saturated with the dissolved target polymer. Besides the target polymer, other non-target polymers may be present. Preferably non-target polymers do not dissolve in the solvent or have a lower solubility under said conditions than the target polymer. If for example plastic waste is recycled the non-target polymers are preferably present to a lesser degree than the target polymer. Preferably non-target polymers are dissolved in an amount of less than 1 wt%, in particular less than 0.5 wt%, with respect to the total weight of the solvent and the polymer that is dissolved.

It is preferred if the suspension or solution is heated to an average temperature above 20°C, in particular to an average temperature above room temperature of 25°C, in particular preferred to an average temperature of more than 40°C.

In some embodiments, the suspension or solution has an average temperature of at least 50°C, in particular of at least 80°C. In some embodiments during dissolving of the target polymer in the solvent, the solvent is heated to an average temperature of 20 to 160°C, in particular of 40 to 140°C, preferably of 50 to 100°C. In some embodiments, the suspension or solution is heated to an average temperature of 60 to 180°C. For low-density polyethylene (LDPE) as a target polymer an average temperature of 80 to 120°C was found to be particularly suitable for dissolving said polymer. For high-density polyethylene (HDPE) as a target polymer an average temperature of 100 to 140°C was found to be particularly suitable for dissolving said polymer. For polypropylene (PP) as a target polymer an average temperature of 120 to 160°C was found to be particularly suitable for dissolving said polymer. In some embodiments the average temperature in the above described vessel of the suspension or solution, in particular when dissolving the target polymer, is above 20°C, preferably above 40°C, in particular above 60°C, in particular preferred above 80°C. This may also be the average temperature of the suspension or solution in said vessel comprising said solvent or suspension. In some embodiments, dissolving the target polymer is conducted under temperature which is lower by more than 5 K, in particular by more than 10 K than the boiling point of said solvent.

In some embodiments the peak temperature of the suspension or solution, in particular when dissolving the target polymer, is above 20°C, preferably above 40°C, in particular above 60°C, in particular preferred above 80°C. This may also be the peak temperature of the solvent and/or suspension or solution in said vessel comprising said solvent or suspension. It is to be understood that the average temperature is preferably selected in such a way that a most ― if not all ― of the target polymer is dissolved and/or remains dissolved in said solvent.

In one embodiment, the suspension or solution comprising the target polymer is heated in the above mentioned step ii) to an average temperature above 20°C, in particular to an average temperature above room temperature of 25°C, in particular preferred to an average temperature of more than 40°C, and/or maintained at said average temperature. In some embodiments in step ii) the suspension or solution has an average temperature of at least 50°C, in particular of at least 80°C. In some embodiments size classification is conducted at an average temperature of 20 to 160°C, in particular of 40 to 140°C, preferably of 50 to 100°C. In some embodiments in step ii) the suspension or solution is heated to an average temperature of 60 to 180°C. For low-density polyethylene (LDPE) as a thermoplastic target polymer an average temperature of 80 to 120°C in step ii) was found to be particularly suitable. For high-density polyethylene (HDPE) as a thermoplastic target polymer an average temperature of 100 to 140°C in step ii) was found to be particularly suitable. For polypropylene (PP) as a thermoplastic target polymer an average temperature of 120 to 160°C was found to be particularly suitable in step ii). This may also be the average temperature of the suspension or solution in a filtration unit

In some embodiments the peak temperature of the suspension or solution during the above mentioned step ii) is above 20°C, preferably above 40°C, in particular above 60°C, in particular preferred above 80°C. This may also be the peak temperature of the solvent and/or suspension or solution in a size classification unit comprising said solvent or suspension. In some embodiments in step ii) the suspension or solution has a peak temperature of at least 50°C, in particular of at least 80°C. In some embodiments, size classification is conducted at a peak temperature of 20 to 160°C, in particular of 40 to 140°C, preferably of 50 to 100°C. In some embodiments in the above mentioned step ii) the suspension or solution is heated to a peak temperature of 60 to 180°C.

In some embodiments purifying said suspension or solution comprises removing undissolved components of said suspension or solution by mechanical solid-liquid separation. In some embodiments the mechanical solid-liquid separation is achieved by a centrifuge. In some embodiments a sieve, in particular a metal sieve or ceramic sieve, may be used alternatively or additionally for mechanical solid-liquid separation.

In some embodiments said solid-liquid separation removes any particles that weigh more than 1000 mg, in particular more than 100 mg, preferably more than 10 mg. In some embodiments the solid-liquid separation removes any particles that weigh more than 50 mg, in particular more than 5 mg, preferably more than 1 mg. After solid-liquid separation the suspension preferably becomes a solution comprising the target polymer and solid particles.

In some embodiments said solid-liquid separation comprises removing at least 50 % by weight (wt%), in particular at least 90 % by weight, preferably 99 % by weight, of any substances that have not been dissolved, preferably by centrifugation.

In some embodiments the centrifuge is a gastight centrifuge, in particular wherein the suspension may be centrifuged under gastight conditions. In some embodiments, solvent removal is performed under gastight conditions. In yet another embodiment, the recycling process is conducted under gastight conditions.

In some embodiments the oxygen content within the centrifuge is below 15% by weight, in particular below 10% by weight, preferably below 7% by weight, in particular preferred with respect to the total weight of the suspension within the centrifuge and/or with respect to the gas composition within the centrifuge.

In some embodiments, the solvent is a single organic solvent or a mixture comprising at least one organic solvent, preferably a mixture of two or more organic solvents.

In some embodiments, the solvent used to dissolve the target polymer is a single organic solvent or a mixture comprising at least one organic solvent, preferably a mixture of two or more organic solvents. In some embodiments, the solvent is a single organic solvent or a mixture of solvents comprising at least one organic solvent.

In some embodiments said organic solvents are aliphatic or aromatic hydrocarbons. In some embodiments, the solvent comprises aliphatic or aromatic hydrocarbons. They may be saturated or unsaturated. In some embodiments solvents comprise cyclic organic compounds. In one embodiment, solvents comprise organic acids comprising but not limited to formic acid and/or acetic acid. In one embodiment, the solvent comprises formic acid, acetic acid, ketones such as acetone or propanone and alcohols such as methanol or ethanol or polyols such as glycol or 2-propanol or mixtures thereof. In one embodiment, the solvent comprises formic acid, acetic acid, ketones such as acetone or propanone and alcohols such as methanol or ethanol or polyols such as glycol or 2-propanol, or mixtures thereof. The solvent is selected in such a way that the target polymer is dissolved. For polyethylene (PE), in particular low-density polyethylene (LDPE), heptane was found to be a particularly suitable solvent, in particular at 85 to 95°C and/or at a pressure of 0.8 to 1.2 bar. For polyethylene (PE), in particular high-density polyethylene (HDPE), heptane was found to be a particularly suitable solvent, in particular at 105 to 115°C and/or at a pressure of 1 to 2 bar. For polypropylene (PP) octane was found to be particularly suitable solvent, in particular at an average temperature of 125 to 135°C. For PVC acetone was found to be a particularly suitable solvent, in particular at an average temperature of 80 to 160°C. For polyamide (PA), in particular polyamide-6, propylene glycol was found to be a particularly suitable solvent, preferably at an average temperature of 80 to 160°C.

In some embodiments the solution or suspension contains 10 or more weight per cent of said target polymer with respect to the total weight of said solvent or mixture of solvents and the polymer that is dissolved.

In some embodiments a pressure which is lower than 6 bar, in particular less than 2 bar is applied to provide the solution or suspension. In some embodiments a pressure of 1 bar to 1.2 bar, in particular the atmospheric pressure (no extra pressure has to be applied in this case) is applied.

In some embodiments step ii) is conducted at a pressure of 0.5 bar to 5 bar, in particular 0.8 bar to 2 bar.

In some embodiments only a single target polymer is present. In other embodiments a blend of target polymers is produced and may be used for production of pellets.

In some embodiments the target polymer is low-density polyethylene (LDPE) and the solvent is selected from the group comprising alkanes, iso-alkanes and cyclic alkanes, and wherein if the solvent of LDPE is an alkane, said alkane preferably is n-heptane.

In some embodiments said target polymer is low-density polyethylene (LDPE) and said solvent is n-heptane.

In some embodiments the target polymer is polypropylene (PP) and said solvent is n-nonane.

In some embodiments the target polymer is polyamide (PA) and said solvent is propylene glycol.

In one embodiment, wherein the solvent is a mixture of solvents, the boiling point of the mixture of solvents may be referred to as the boiling point of the solvent with the lowest boiling point in a mixture of solvents.

In one embodiment, size classification, including filtration of the suspension or solution comprising the target polymer with said size classification unit is conducted at a temperature that is higher by >50 K, preferably higher by >75 K, most preferred higher by >100 K than the boiling point of the solvent, or the boiling point of the solvent with the lowest boiling point in a mixture of solvents. In one embodiment, filtration of the suspension or solution comprising the target polymer with said size classification unit is conducted at a temperature that is higher by >50 K, preferably higher by >75 K, most preferred higher by >100 K than the boiling point of the solvent; or the solvent with the lowest boiling point in a mixture of solvents, wherein the pressure is > 30 bar, preferably > 50 bar, most preferred > 100 bar. In one embodiment, filtration of the suspension or solution comprising the target polymer with said size classification unit is conducted in an extruder at a temperature that is higher by >50 K, preferably higher by >75 K, most preferred higher by >100 K than the boiling point of the solvent, or the solvent with the lowest boiling point in a mixture of solvents, wherein the pressure is > 30 bar, preferably > 50 bar, most preferred > 100 bar.

Preferably the solvent for the target polymer comprises at least 80 % by weight of organic solvent, in particular at least 90% by weight of organic solvent, in particular preferred at least 95% by weight of organic solvent. The content of water in said solvent ― if any ― is preferably below 20% by weight, in particular below 10% by weight. In some embodiments the suspension or solution may also comprise a solvent with the above described composition.

Preferably the solvent for the target polymer comprises at least 60 % by weight of organic solvent, in particular at least 80% by weight of organic solvent, in particular preferred at least 90% by weight of organic solvent. The content of water in said solvent ― if any ― is preferably below 40% by weight, in particular below 20% by weight, better below 10% by weight. In some embodiments the suspension or solution may also comprise a solvent with the above described composition.

In one embodiment, the method is a post-treatment step of a solvent-based recycling process for recycling plastic waste. In one embodiment, the method is a post-treatment step of a solvent-based recycling process for recycling plastic waste.

In one embodiment, the method is for recycling plastic waste and is carried out in a plastic waste recycling plant.

In some embodiments, the solvent obtained after step ii) is at least partially reused for dissolving target polymer to provide more suspension or solution comprising the dissolved target polymer. In some embodiments the solvent for reuse is purified by evaporation of the solvent and condensation and/or by distillation, wherein impurities are removed by evaporation and the solvent remains. Often the best approach depends on the boiling point of the solvent. However, in some embodiments purification is not necessary and the solvent may be reused directly, preferably if the same target polymer is targeted in subsequent rounds of dissolving polymers.

In some embodiments, the concentrated target polymer of step i) has the consistency of a gel. It may be then called a target polymer gel.

In some embodiments polymer pellets are formed in the above mentioned step ii). In some embodiments, products such as foils, pipes, bottles, pallets, lawn grids or building materials for houses are formed from said pellets or directly from concentrated target polymer obtained in step i) by blow molding, extrusion, pressing and/or injection molding.

In some embodiments step ii) comprises forming a polymer melt prior to extrusion and/or forming pellets or products using a pellet cutter after extrusion. Residual solvent is more efficiently removed from such a polymer melt.

In some embodiments separating said target polymer from the solution according to step ii) means that at least 50 % by weight, in particular at least 75 % by weight, preferably at least 90 % by weight of the solvent is removed. In some embodiments at least 99 % by weight of the solvent is removed. In some embodiments, if more than 60% by weight of the solvent is removed, the solvent removal up to and over 99 % by weight is conducted by means of a degassing extruder.

In some embodiments of the method, wherein the method is for recycling plastic waste, at least 50 % by weight, preferably at least 80 %, by weight in particular 90 % by weight, of the plastic waste is plastic, wherein said plastic also includes the target polymer. In some embodiments at least 50 % by weight, preferably at least 80 %, by weight in particular 90 % by weight, of the plastic waste is the target polymer. In some embodiments at least up to10 % by weight, preferably up to 20 % by weight, in particular up to 50 % by weight of the plastic waste is plastic.

In a preferred embodiment the plastic waste is made to at least 80 % by weight, preferably to at least 90% by weight, of said target polymer, in particular a single polymer or a mixture of two or three polymers.

Alternatively or additionally according to some embodiments providing a suspension or solution comprising a target polymer may be preceded by washing of plastic waste prior to insertion of the plastic waste into the solvent, e.g. washing with water. Washing removes some impurities. In some embodiments washing is performed by means of contacting said material with a liquid to produce a suspension with subsequent purifying the obtained suspension, in particular by means of mechanical solid-liquid separation. In some embodiments said liquid is water. In some embodiments washing may comprise washing with water at an average temperature of more than 40°C, in particular more than 80°C. Also washing with water may be conducted using a friction washer, in particular wherein a rotor transports plastic waste and/or water is transported in opposite direction to the plastic waste. Friction by rotors and water remove impurities. In some embodiments there is no such step with a friction washer and the shredded plastic waste is used directly. This may be the case if plastic waste from post-industrial residues is recycled. With plastic waste from consumer products often said washing step is advantageous.

According to some embodiments, providing a suspension or solution comprising the target polymer is achieved by downsizing plastic waste comprising the target polymer prior to insertion of said plastic material into said solvent or said mixture of solvents. Downsizing improves speed and/or completeness of dissolving of the target polymer, if the target polymer is obtained from plastic waste. In one embodiment, downsizing is shredding or cutting, or combinations thereof. Devices for downsizing plastic waste are known in the state of the art. In one embodiment, downsizing may be dust-poor or dust-free downsizing, wherein dust-poor means that up to 99wt% of the plastic waste to be dissolved may be ≥100 µm, particularly ≥300 µm in diameter.

In some embodiments said plastic waste contains polyethylene (PE) and aluminum, preferably polyethylene, aluminum and paper. In some embodiments at least 60 % by weight, in particular at least 80 % by weight, preferably at least 90 % by weight, of the plastic waste consists of said materials.

In some embodiments the plastic waste is at least partially obtained from packaging materials and/or foils. In some embodiments at least 60 % by weight, in particular at least 80 % by weight, preferably at least 90 % by weight, of the plastic waste consists of packaging materials and/or foils.

In some embodiments said plastic waste is at least partially obtained from car parts. In some of said embodiments at least 60 % by weight, in particular at least 80 % by weight, preferably at least 90 % by weight, of the plastic waste consists of car parts.

In some further embodiments the plastic waste comprises at least one type of object selected from a group consisting of cans, cups, foils, collapsible tubes, plastic bags. In some embodiments the plastic waste is mixed waste comprising at least two or three types of objects selected from a group consisting of cans, cups, foils, collapsible tubes, plastic bags. Said types of objects preferably constitute at least 20% by weight, in particular at least 40% by weight, preferably at least 60% by weight, of the total weight of said plastic waste.

In one embodiment, the invention relates to an integrated size classification and extrusion step, optionally comprising degassing with a degassing unit that is integrated into a plastic waste recycling method comprising a plastic waste recycling plant.

In one embodiment, the plastic waste recycling plant comprises the following stations:
a. a station that comprises a downsizing device for plastic waste, that optionally is a cutting or shredding device for plastic waste, and optionally a plastic particle size classification device for classifying the downsized plastic waste;
b. optionally a station for washing the downsized, optionally classified plastic waste produced in station a.);
c. a station that comprises a vessel, wherein the vessel comprises an agitator and/or a heating system and/or an organic solvent for dissolving the at least one target polymer derived from the downsized, optionally classified plastic waste produced in station a.), or the optionally washed plastic waste produced in station b.);
d. optionally a station that comprises a centrifuge for solid-liquid separation;
e. a station comprising an extruder with a size classification unit, wherein the size classification unit is permeable for the solvent and impermeable for the target polymer, and wherein the extruder with size classification unit is used for size classification and extrusion of the target polymer, wherein the extruder comprises a degassing unit and optionally a heating unit, wherein said extruder optionally produces plastic pellets;
wherein the plastic waste recycling plant has a transfer system that transfers materials from each station to the next in the above listed order.

Optional stations are not implemented in some embodiments and if they are not, the transfer system transfers to the next station that is implemented. Also additional stations that are not described explicitly may be implemented.

The vessel comprises a solvent and/or an agitator for stirring the waste. The agitator may be connected to said vessel and/or it may be disposed in said vessel. The vessel may in some embodiments be a tank, in particular a closed tank. The vessel may be a tank with a volume of 1 m³ to 100 m³, in particular of 5 m³ to 50 m³, in particular preferred of 20 m³ to 40 m³.

Preferably, the plastic waste recycling system is adapted for implementing the method as described above.

Preferably, the vessel comprises an organic solvent for dissolving plastic waste at least partially.

In one embodiment, the vessel comprises a mixture of solvents, comprising at least one organic solvent for dissolving plastic waste at least partially.

Any devices that are used for the method as described above may preferably be also part of the plastic waste recycling system.

The invention also relates to the use of the above described plastic waste recycling system for implementing the method as described above.

In some embodiments the thermoplastic target polymer precipitates during size classification.

In some embodiments only a single thermoplastic target polymer is present. In other embodiments a blend of thermoplastic target polymers is produced and may be used for production of pellets.

In some embodiments the pressure differential across the inner enclosure that comprises the size classification unit is at least 0.1 to 5 bar, preferably 1 to 4 bar, in particularly preferred 2 to 3 bar. In another embodiment, the pressure differential across the inner enclosure that comprises the size classification unit is determined by the pressure that is present in the plastic extruder during extrusion. In another embodiment, the pressure differential across the inner enclosure that comprises the size classification unit is > 30 bar, preferably > 50 bar, most preferred > 100 bar.

Preferably size classification is conducted at an average temperature of less than 180°C. In some embodiments, size classification is conducted at an average temperature of 20 to 180°C, in particular of 60 to 160°C, in particular preferred of 80 to 120°C.

In some embodiments, size classification is performed by using progressively more retentive membranes, in particular microfiltration membranes and ultrafiltration membranes. In one embodiment a microfiltration membrane with a pore size of 100 - 300 kDa may be used.

In some further embodiments the size classification is a continuous process, wherein continuous means that the size classification step that is part of a solvent removal process of a solution or suspension comprising a target polymer, does not require the temporal or spatial interruption of any preceding or following process that is part of a polymer recycling method, particularly a recycling method that is subject matter of the present invention.

In some further embodiments the size classification is a continuous process, wherein several membranes are used in series, in particular at least one microfiltration membrane and at least one ultrafiltration membrane.

In some further embodiments the size classification is a variable pressure filtration by using a single membrane or several membranes and varying the applied pressures, in particular by using a single membrane, preferably an ultrafiltration membrane.

These techniques sometimes also can be combined, e.g. a cross-size classification technique that uses several membranes in series and with variable pressures.

In some embodiments the above mentioned steps i) and/or ii) are conducted in an environment containing less than 15 % by weight of oxygen, in particular less than 5 % by weight of oxygen, preferably less than 1 % by weight of oxygen, in particular within the liquid and/or gaseous phase. Not all steps have to contain a gaseous and a liquid phase environment.

In some embodiments the solvent that is obtained after performing step ii) is at least partially reused for dissolving target polymer with the objective to provide more suspension or solution comprising the dissolved target polymer. In some embodiments, the solvent for reuse is purified by evaporation of the solvent and condensation and/or by distillation, wherein impurities are removed by evaporation and the solvent remains. Often the best approach depends on the boiling point of the solvent. However, in some embodiments purification is not necessary and the solvent may be reused directly, without evaporation of the solvent and condensation and/or by distillation, wherein optionally the solvent purification for solvent reuse in subsequent recycling is omitted if the dissolved target polymer used in a previous cycle of size classification is identical to the dissolved target polymer in a subsequent cycle of size classification, wherein a cycle of size classification consists of the provision of the suspension or solution comprising the target polymer, the delivery of the suspension or solution comprising the target polymer to an extruder, the size classification of the suspension or solution comprising the target polymer in an extruder comprising a size classification unit, optionally degassing using a degassing unit, and solvent retrieval by a solvent retrieval unit.

The solvent retrieval unit collects the solvent traversing the pores of the size classification unit of the extruder, and optionally, if the filtered solvent is to be purified by evaporating and/or distilling the collected solvent using a solvent purification unit, passes it to said solvent purification unit.

In one embodiment, solvent removal, collection and purification are performed in a continuous mode. In one embodiment, solvent removal, collection and purification are performed in a continuous mode, wherein continuity of the process is ensured by immediate transfer of solvents from one station to the next, without the need for physical interruption. In some embodiments, at least partially removing solvent means that at least 50 % by weight, in particular at least 75 % by weight, preferably at least 90 % by weight of the solvent is removed, wherein if a solvent removal of more than 60% is to be performed, solvent removal further includes the use of a degassing unit, comprising a degassing extruder.

In some embodiments at least 99 % by weight of the solvent is removed by the method in accordance with the invention, wherein said method comprises a degassing step, optionally performed with a degassing extruder.

The method may be used for at least partially removing of solvent from any kind of solution comprising the target polymer. However, it was found that the method is very robust with respect to removing impurities and may be adapted to isolate a target polymer from plastic waste, i.e. for recycling plastic waste comprising target polymer. Therefore, in some embodiments the method for at least partially removing a solvent is part of a method for recycling plastic waste comprising a target polymer and plastic waste comprising the target polymer is at least partially dissolved in the solvent, in particular using an agitator and/or a heating system. The plastic waste may be immersed in the solvent dissolving the target polymer in said solvent. Surprisingly impurities that are present in said plastic waste do not prevent that size classification can be efficiently conducted. Said method for recycling plastic waste is suitable for any kind of plastic waste comprising a thermoplastic target polymer.

It is possible that the plastic waste is sorted before dissolving in a solvent in and providing a target polymer in a suspension or solution may comprise sorting said plastic waste. However, in some embodiments mixed plastic waste is used and little or no sorting is done.

In one embodiment, removing solvent in step ii) by size classification and extrusion, optionally comprising degassing with a degassing unit such as a degassing extruder, does not preclude the presence of small residues of solvent in the polymer product. However, most of the remaining solvent is removed, in particular at least 70 % by weight, preferably at least 85 % by weight, in particular preferred at least 95% by weight of any remaining solvent, more particularly at least 99% by weight of any remaining solvent.

Preferably the plastic waste recycling plant is adapted for implementing the method as described above.

Preferably the vessel comprises an organic solvent for dissolving plastic waste at least partially.

Any devices that are used for the method as described above may preferably be also part of the plastic waste recycling plant, e.g. the vessel as described for the method of the specifics of the membrane.

The invention also relates to the use of the above described plastic waste recycling plant for recycling a target polymer from plastic waste by dissolving said target polymer in a solvent comprising at least one organic solvent, and retrieval of said target polymer from the solvent comprising at least one organic solvent.

The invention also relates to the use of a size classification unit with an extruder for at least partially removing solvent from a suspension or solution comprising dissolved polymer, preferably using the type size classification unit with an extruder that is described in this disclosure.

The invention also relates to the use of a size classification unit with an extruder and/or size classification unit with an extruder for recycling of plastic waste, in particular municipal solid waste, preferably using the type of size classification unit that is described in this disclosure and/or for the type and/or composition of plastic waste that is described in this disclosure.

With the above context, the following consecutively numbered embodiments provide further specific aspects of the invention:
1. A continuous method for removing a solvent from a suspension or solution comprising a target polymer, wherein the method comprises the following steps:
   (i) delivering said suspension or solution to an extruder, wherein said extruder comprises a size classification unit that is designed to be permeable for the solvent and impermeable for the target polymer; and
   (ii) filtration and extrusion of said suspension or solution in said extruder.
2. The method according to embodiment 1, wherein the size classification unit is a membrane or sieve.
3. The method according to embodiment 1 or 2, wherein the extruder further comprises a degassing unit.
4. Method according to embodiment 3, wherein the degassing unit is used for essentially complete degassing of the target polymer in solution or suspension, wherein essentially complete degassing means that ≤ 1 wt% (≤ 10000 ppm), preferably ≤ 0.1 wt% (≤ 1000 ppm) of solvent is present after the essentially complete degassing.
5. The method according to any one of embodiments 1 to 4, wherein the filtration of said suspension or solution is performed during extrusion and/or degassing in said extruder comprising the classification unit.
6. The method according to any one of embodiments 1 to 5, wherein the extruder comprises an inner and an outer enclosure, wherein the inner enclosure further comprises a size classification unit that is impermeable to the target polymer and therefore allows the solvent to exit the inner enclosure and the target polymer to remain inside the inner enclosure, thereby allowing filtration of the suspension or solution through said size classification unit in the extruder.
7. The method according to any one of embodiments 1 to 6, wherein up to 5%, preferably up to 10%, more preferably up to 20%, more preferably up to 30%, more preferably up to 40%, even more preferably up to 50%, most preferably up to 60% of solvent is removed from said solution or suspension .
8. The method according to embodiment 2, wherein the membrane or sieve is designed to be impermeable for target polymers with an average molecular mass of 1000 kDa or more, in particular target polymers with an average molecular mass of 500 kDa or more, in particular preferred target polymers with an average molecular mass of 200 kDa or more.
9. The method according to embodiment 2 or 8, wherein the size classification unit is a membrane, and wherein a material of the membrane is selected from a group consisting of polyamide membrane, polyvinylidene difluoride membrane, polyethersulfone membrane, polysulfone membrane, polydimethylsiloxane membrane, polypropylene membrane, or a combination thereof.
10. The method according to embodiment 2 or 8, wherein the size classification unit is a sieve, wherein the sieve is made of a material comprising metal and/or ceramics.
11. The method according to any one of embodiments 1 to 10, wherein the filtration is driven by a pressure differential across the size classification unit, wherein the pressure differential is > 30 bar, preferably > 50 bar, most preferred > 100 bar.
12. The method according to embodiment 11, wherein the pressure differential is achieved by a vacuum pumping system aided with heating, wherein heating refers to a temperature not exceeding a maximal temperature of 5K, particularly 10K below the boiling point of the solvent, or the solvent with the lowest boiling point in a mixture of solvents.
13. The method according to any one of embodiments 1 to 12, wherein the target polymer is a thermoplastic target polymer.
14. The method according to any one of embodiments 1 to 13, wherein the target polymer is derived from polymers selected from the group comprising post-consumer use polymers, post-industrial use polymers and combinations thereof.
15. The method according to any one of embodiments 1 to 14, wherein the target polymer is selected from the group comprising polyolefins, polyamide (PA) and combinations thereof.
16. The method according to any of embodiments 1 to 15, wherein the target polymer is a polyolefin.
17. The method according to embodiment 16, wherein the target polymer is low-density polyethylene (LDPE).
18. The method according to embodiment 16, wherein the target polymer is polypropylene (PP).
19. The method according to embodiment 16, wherein the target polymer is polyamide (PA).
20. The method according to any of embodiments 1 to 19, wherein the solvent is a single organic solvent or a mixture of solvents comprising at least one organic solvent.
21. The method according to any one of embodiments 1 to 20, wherein the solvent comprises aliphatic or aromatic hydrocarbons.
22. The method according to any one of embodiments 1 to 21, wherein the solvent comprises formic acid, acetic acid, ketones such as acetone or propanone and alcohols such as methanol or ethanol or polyols such as glycol or 2-propanol or mixtures thereof.
23. The method according to any one of embodiments 1 to 22, wherein the target polymer is low-density polyethylene (LDPE) and the solvent is selected from the group comprising alkanes, iso-alkanes and cyclic alkanes, and wherein if the solvent of LDPE is an alkane, said alkane preferably is n-heptane.
24. The method according to any one of embodiments 1 to 23, wherein the target polymer is polypropylene (PP) and the solvent is n-nonane.
25. The method according to any one of embodiments 1 to 24, wherein the target polymer is polyamide (PA) and the solvent is propylene glycol.
26. The method according to any one of embodiments 1 to 25, wherein filtration of the suspension or solution comprising the target polymer with said size classification unit is conducted at a temperature that is higher by >50 K, preferably higher by >75 K, most preferred higher by >100 K than the boiling point of the solvent, or the solvent with the lowest boiling point in a mixture of solvents.
27. The method according to any one of embodiments 1 to 26, wherein the method is a post-treatment step of a solvent-based recycling process for recycling plastic waste.
28. The method according to any one of embodiments 1 to 27, wherein the method is for recycling plastic waste and is carried out in a plastic waste recycling plant.
29. Plastic waste recycling plant, in particular for implementing the method according to any of embodiments 1 to 28, comprising the following stations:
   a) a station that comprises a downsizing device for plastic waste, that optionally is a cutting or shredding device for plastic waste, and optionally a plastic particle size classification device for classifying the downsized plastic waste;
   b) optionally a station for washing the downsized, optionally classified plastic waste produced in station a);
   c) a station that comprises a vessel, wherein the vessel comprises an agitator and/or a heating system and/or an organic solvent for dissolving the at least one target polymer derived from the downsized, optionally classified plastic waste produced in station a), or the optionally washed plastic waste produced in station b);
   d) optionally a station that comprises a centrifuge for solid-liquid separation;
   e) a station comprising an extruder with a size classification unit, wherein the size classification unit is permeable for the solvent and impermeable for the target polymer, and wherein the extruder with size classification unit is used for size classification and extrusion of the target polymer, wherein the extruder comprises a degassing unit and optionally a heating unit, wherein said extruder optionally produces plastic pellets;
      wherein the plastic waste recycling plant has a transfer system that transfers materials from each station to the next in the above listed order.

### Definitions

Listed below are definitions of various terms used to describe this invention. These definitions apply to the terms as they are used throughout this specification and claims unless otherwise limited in specific instances either individually or as part of a larger group. Unless defined otherwise all technical and scientific terms used herein generally have the same meaning as commonly understood by one of ordinary skill in the art to which this invention belongs.

As used herein the articles "a" and "an" refer to one or to more than one (i.e. to at least one) of the grammatical object of the article. By way of example, "an element" means at least one element, i.e. an element or more than one element. This applies in particular also for "a target polymer" and "a solvent" as discussed below.

As used herein the term "average temperature" refers to a temperature that is averaged over time, preferably over the duration of the corresponding step. In a continuous system the duration of a step refers to the average time of the waste material under the conditions as described for said step. There may be location dependent variations within the solvent that can be reduced by stirring. In said case the temperature should also be averaged over said locations to determine the average temperature. With sufficient stirring the average temperature usually is only location dependent to a small degree and the average temperature can be determined by measuring in one spot for the duration of a step.

As used herein the term "peak temperature" refers to a maximum temperature that is achieved during a step. It may be determined by continuously monitoring the temperature and selecting the maximum temperature. For example with a batchwise implementation of steps the temperature may drop, e.g. when cold plastic waste is inserted into the solvent. A heating system may heat the vessel to achieve said peak temperature before the solvent is lead to the next step. In a continuous system the temperature may be constant and there often is no difference between "average temperature" and "peak temperature". There also may be location dependent variations within the solvent and in said case the temperature may be averaged over said locations (not over time) to determine the peak temperature.

As used herein the term "solvent" refers to a single solvent or a mixture of different solvents. A single solvent may facilitate recovery whereas a mixture may reduce the use of toxic solvents or accelerate dissolution of a polymer.

As used herein the term "target polymer" refers to a single polymer or a mixture of different polymers. Polymers also include copolymers and block polymers. Often a mixture of polymers cannot be avoided completely. Preferably the term "target polymer" refers to a single polymer or a mixture of different polymers that are dissolvable in the solvent and may be used for producing polymer pellets. In some instances "target polymer" refers to a mixture of one, two or three polymers as a major component, wherein impurities are possible that have a weight of less than 5 % by weight (wt%) compared to the total weight of the target polymer. Furthermore, use of the term "target polymer" is to be understood in the above way also when "a target polymer", "the target polymer" or "said target polymer" is mentioned unless it is explicitly stated that it is only a single polymer or a mixture of different polymers, i.e. "a target polymer" is "at least one target polymer"; "the target polymer" is "the at least one target polymer" and "said target polymer" is "said at least one target polymer" unless stated otherwise. A non-target polymer may also be a polymer that is not dissolvable in the used solvent and it may be removed by solid-liquid separation.

As used herein the term "several" refers to two, three, four or more entities, preferably two or three entities.

As used herein the term "plastic waste" refers to waste comprising plastic. Preferably plastic waste is any substance that is discarded after primary use, and/or has been discarded, e.g. because it is defective. In some embodiments the "plastic waste" is solid. In some embodiments "plastic waste" refers to municipal solid waste, in particular comprising everyday items that are discarded by the public. In some embodiments "plastic waste" refers to post-consumer use polymers, post-industrial use polymers and combinations thereof.

As used herein the term "mixed plastic waste" refers to plastic waste containing different kinds of plastic objects. Often plastic is sorted before it is used, e.g. only plastic bags are provided or only plastic foils. This usually requires a sorting of plastic. In some instances mixed plastic waste is municipal plastic waste as obtained from households, i.e. plastic bags, plastic packaging, plastic tubes and such can be mixed. It was found that mixed plastic waste can be used to produce polymer in accordance with the invention without need of collection in groups of identical materials and/or objects.

As used herein the term "essentially soluble" with respect to the target polymer refers to the solubility of said target polymer in said solvent or said mixture of solvents in an amount not less than 5 wt%, more preferably not less than 7 wt%, in particular not less than 10 wt%, with respect to the total weight of said solvent or mixture of solvents and the of polymer that is dissolved.

As used herein the term "essentially insoluble" with respect to the additive refers to the solubility of said target polymer in said solvent or said mixture of solvents an amount of less than 1 wt%, in particular less than 0.1 wt%, with respect to the total weight of said solvent or mixture of solvents and the of polymer that is dissolved.

As used herein the term "non-solvent" with respect to said extractant refers to the solubility of said target polymer in said extractant an amount of less than 1 wt%, in particular less than 0.5 wt%, with respect to the total weight of the extractant and the polymer that is dissolved.

As used herein the term "extractant" refers to a liquid which is a non-solvent for the target polymer.

As used herein the term "alkanes" refers to straight chain hydrocarbons having from 5 to 20 carbon atoms, typically from 5 to 12 carbon atoms. Examples include, but are not limited to n-hexane, n-heptane, n-octane and n-nonane.

As used herein the term "iso-alkanes" refers to branched chain hydrocarbons having from 5 to 20 carbon atoms, typically from 5 to 12 carbon atoms. Examples include, but not limited to isooctane.

As used herein the term "cyclic alkanes" refers to cyclic, saturated hydrocarbons wherein each of the atoms forming the ring (i.e. skeletal atoms) is a carbon atom. Cyclic alkanes may be optionally substituted by an alkyl group having from 1 to 4 carbon atoms. Examples include, but not limited to cyclohexane, methylcyclohexane.

As used herein the term "ketones" refers to organic compounds having a carbonyl group linked to a carbon atom. Examples include, but not limited to acetone, butanone.

As used herein the term "organic acids" refers to organic compounds having a functional group of formula C(=O)OH. Examples include, but not limited to formic acid, acetic acid.

As used herein the term "ester" refers to organic compounds having a functional group of formula C(=O)OR, wherein R represents an alkyl group. Examples include, but not limited to ethylacetate, benzylacetate.

The "number average molecular weight" is preferably the total weight of the respective polymer sample, e.g. the target polymer, divided by the number of polymer molecules in the sample. The "average molecular mass" may be determined according to ISO 16014-1:2012 and/or ISO 16014-2:2012, preferably by ISO 16014-1:2012.

The terms "virgin polymer", "virgin-like" or "virgin-grade polymer" refer to different grades of purity of a solid polymer, or plastic product comprising a certain target polymer. In the context of the present invention, the term "virgin polymer" or "virgin-grade polymer" refers to >95wt%, preferably >99wt%, most preferred 100wt% of target polymer. The term "virgin-like polymer" refers to >90wt%, preferably >95wt%, most preferred >99wt% target polymer.

The terms "filtration" and "size classification" in general refer to a process that separates larger entities from smaller entities, or vice-versa, by passing entities with a size distribution across a barrier with defined size exclusion properties, allowing smaller entities to pass, whereas larger entities are retained by the barrier. In the context of the present invention, size classification refers to classification of polymer entities with a certain size distribution, wherein it is one objective of the present invention to separate target polymer from non-target polymer entities, based on size, thereby allowing solvents and impurities to be separated from the polymer. The terms "filtration" and "size classification" may be used interchangeably according to the subject matter of the invention, if a solution or suspension is passed across a barrier with defined size exclusion properties. Another example of size classification is the process of "solid-liquid separation", in which undissolved entities are mechanically separated from dissolved entities, wherein undissolved entities are larger than dissolved entities, thereby representing a size classification process.

In the context of the present invention "impurity" refers to any molecule or entity that is not meant to be a part of the product produced by the method that is subject matter of the present invention. More specifically, if the product is meant to be a polymer, then anything apart from the polymer is classified as an impurity. If the product is meant to be a polymer with certain additives, then anything apart from the polymer with certain additives is classified as an impurity. Another example would be if the product is meant to contain a polymer of certain length, and/or branching, or a certain distribution thereof, optionally further comprising certain additives, then anything that does not form part of polymer of certain length, and/or branching, or a certain distribution thereof, optionally further comprising certain additives, is to be considered as "impurity". The definition as to what is considered an impurity thus depends on what the person skilled in the art does not consider a defining constituent of the particular product.

The term "size classification unit" refers to a physical unit or entity used in a size classification process, wherein the size classification unit is capable of mediating the process of size classification, as defined above.

"Polymer stabilizers" are chemical molecules capable of increasing the strength, resilience, durability, or resistance to external factors, wherein said polymer stabilizers specifically prevent the disintegration of polymer chains within a polymer structure.

"Gastight" means that at least 95%, preferably at least 99%, most preferred 100% of volume remains enclosed in a particular enclosure that is sealed from the surrounding environment. In the context of the present invention, a pipe comprising an organic solution or suspension with a highly volatile and flammable solvent may be enclosed in a gastight enclosure with low oxygen concentration, in order to prevent contact with the oxygen of the atmosphere that is surrounding said enclosure, in order to reduce the risk of combustion.

An "extruder" means any plastic extruder known from the prior art. This may also include degassing extruders. However, if the term "degassing extruder" is used, then plastic extruders without the capability for degassing are excluded. Degassing extruders are also known from the prior art.

The term "downsizing" refers to any process that reduces the size of a physical entity. In the context of the present invention, downsizing specifically refers to the size reduction of plastic material, and in some examples comprises shredding or cutting of plastic material.

### Examples

### Example 1

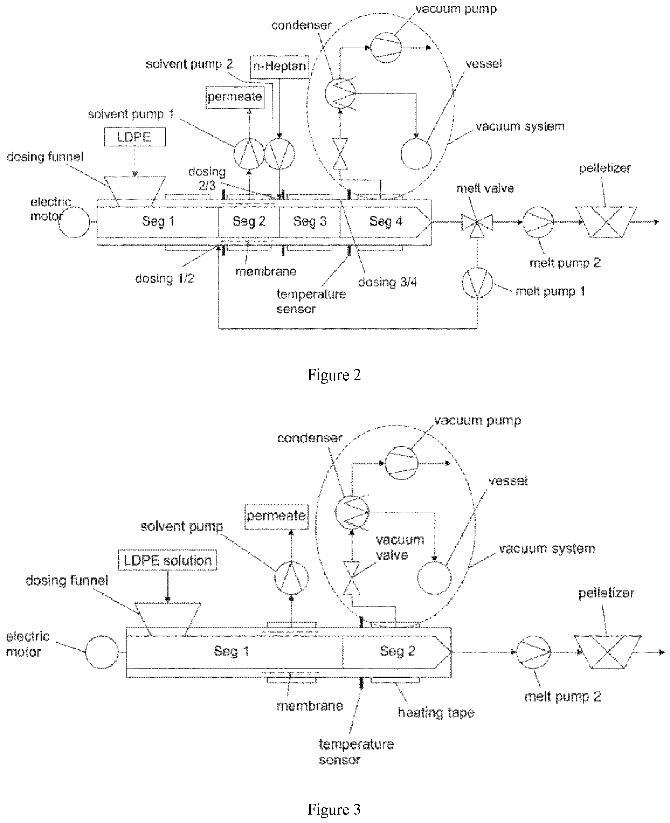

Equipment (depicted on Figure 2):
a. Twin screw extruder
   i. 4 heatable segments equipped with heating tapes
   ii. Temperature sensors
   iii. Dosing stations: between Segment 1 and Segment 2, Segment 2 and Segment 3.
   iv. Screw design, that enables the melt to seal between the segments
   v. Segment 1 is melting zone
   vi. Segment 2 is the membrane segment
   vii. Segment 3 is mixing zone
   viii. Segment 4 is degassing zone
   ix. Each segment is equipped with sight glass
   x. 3-way melt valve
   xi. Pelletizing unit
   xii. Electric motor
   xiii. Dosing funnel
b. 2 melt pumps
c. 2 solvent pumps
d. Vacuum system
   i. Vacuum pump
   ii. Condenser
   iii. Vessel
   iv. Valve

Process:
a. The extruder was pre-heated for standard LDPE extrusion (210-220°C, each segment).
b. The vacuum pump was switched on and the pressure of 300 mbar was reached in segment 4 with a closed valve.
c. 10 kg of LDPE virgin granulates were weighed and transferred to the extruder via the dosing funnel.
d. 4,3 kg of n-heptane were weighed and transferred into a vessel.
e. Extrusion was started and LDPE was melted within Segment 1 of the extruder. Melt was observed via sight glasses.
f. When the melt reached Segment 2, observed via sight glass, solvent pump 2 was switched on.
g. LDPE-melt and n-heptane were mixed in Segment 3.
h. The 3-way melt valve was opened to the position which enabled transporting the polymer solution obtained in step g to melt pump 1.
i. Melt pump 1 was switched on to transfer the polymer solution into Segment 2.
j. Solvent pump 1 was switched on. The permeate was collected into a vessel.
k. The valve of the vacuum system was opened to enable degassing the melt in Segment 4.
l. The 3-way-melt valve was switched to the position which enabled transporting the melt to melt pump 2.
m. Melt pump 2 was switched on to transport the melt to the pelletizing unit.
n. LDPE was pelletized and collected into an octabin.
o. When no further pelletized material was observed, the system was shut down.

The amount of collected permeate (n-heptane) was 1,9 kg what corresponds to 19 mol. The evaporation enthalpy of n-heptane is 32kJ/mol. The amount of saved energy is hence 608 kJ.

### Example 2

Equipment (depicted on Figure 3):
a. Twin screw extruder
   i. 2 heatable segments equipped with heating tapes
   ii. Temperature sensors
   iii. Screw design, that enables the melt to seal between the segments
   iv. Segment 1 is the membrane segment
   v. Segment 2 is degassing zone
   vi. Each segment is equipped with sight glass
   vii. Pelletizing unit
   viii. Electric motor
b. Melt pump
c. Solvent pump
d. Vacuum system
   i. Vacuum pump
   ii. Condenser
   iii. Vessel
   iv. Valve

Process:
a. The extruder is pre-heated for standard LDPE extrusion (210-220°C, each segment).
b. The vacuum pump is switched on and the pressure of 300 mbar is reached in segment 2 with a closed valve.
c. The LDPE solution in n-heptane is transferred into Segment 1 of the extruder via the dosing funnel.
d. The solvent pump is switched on. The permeate is collected into a vessel.
e. The valve of the vacuum system is opened to enable degassing the melt in Segment 2.
f. The melt pump is switched on to transport the melt to the pelletizing unit.
g. LDPE is pelletized and collected into an octabin.

### Example 3

### Tested membranes

The polyvinylidene difluoride (PVDF) membrane from Carl Roth, the polyethersulfone (PES) MF membrane from Millipore, and the polyamide (PA) membrane from Whatman were used.

### Concentrating the LDPE solution

The LDPE solutions in methylcyclohexane (2 mL) were filtered in various membrane reactors with the selected membranes. The temperature control (95 ° C.) was carried out by means of a suitably heated water bath into which the reactor was immersed. The filtration time was 1 hour and the pressure (nitrogen) applied was 5 bar. After one hour, the residual concentration of the solvent in the retentate was determined and the concentration of the solution was calculated. The results for 10 wt% LDPE solutions are shown in Table 1.

**Table 1. Results of concentrating the 10 wt% LDPE solutions**

| Membrane (+ modification) | Final concentration of the LDPE solution in the retentate [% by weight] |
|---|---|
| PA | 26 ± 2 |
| PVDF | 27 ± 3 |
| PES | 38 ± 1 |

The results show that a starting 10% LDPE solution can be concentrated to a final concentration of up to 38%.

In addition, the filtration experiments with LDPE solutions with a lower concentration (2 or 5% by weight) were carried out using the membranes. The results are summarized in Table 2.

**Table 2. Results of concentrating the 10 wt%, 5 wt% and 2wt% LDPE solutions**

| Membrane | Final concentration of the LDPE solution in the retentate [% by weight] | | |
|---|---|---|---|
| | Start conc. 10% by weight | Start conc. 5% by weight | Start conc. 2% by weight |
| PA | 26 | 13 | 11 |
| PVDF | 27 | 24 | 28 |
| PES | 38 | 39 | 20 |

### Description of figures

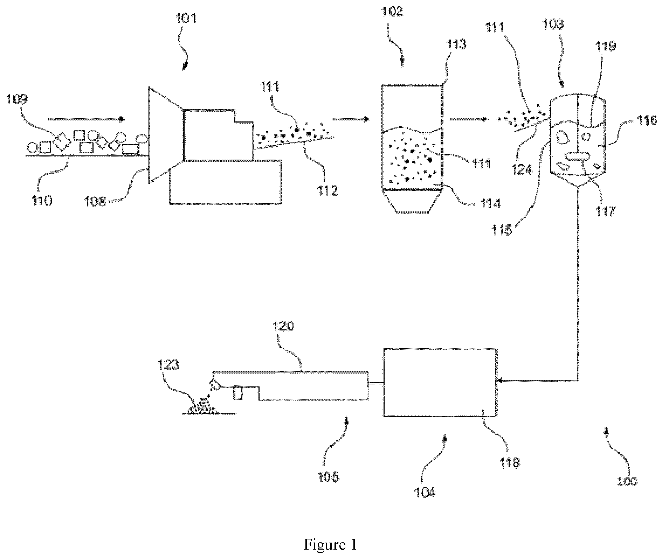

Figure 1 shows a plastic waste recycling plant 100 comprising several stations. The plastic waste recycling plant is only a possible implementation for the method. Also plastic production plants for producing polymers by polymerization may use the described method. A shredding device 108 for plastic waste 109 is comprised in a first station 101. Said plastic waste may be transported by a first conveyor belt 110 into the shredding device 108 and by a second conveyor belt 112 shredded plastic wastes 111 may be transported out of the shredding device 108. Preferably in some embodiments the plastic waste recycling plant 100 comprises a second station 102 for washing the shredded plastic waste 111. Said second station 102 may comprise a container 113 with a washing liquid 114 such as water, wherein shredded plastic waste 111 is purified. The purified shredded plastic waste 111 may be transported, e.g. by another conveyor belt 124, to a third station 103 comprising a vessel 115, wherein the vessel 115 comprises an agitator 117 and/or a heating system, e.g. as part of the vessel 115. In some embodiments the shredded plastic waste 111 is directly transported from the first station 101 to the third station 103. The third station preferably contains a solvent 116, wherein the target polymer is dissolved in said solvent thus forming a solution or a suspension 119. A fourth station 104 may comprise a centrifuge 118 for solid-liquid separation. A fifth station 105 comprises an extruder with membrane 120 for extrusion of the liquefied polymer mass comprising the target polymer optionally for the production of polymer pellets 123.

Figure 2 shows unit 120 (a twin-screw extruder with a membrane) as of Example 1 in a more detail.

Figure 3 shows unit 120 (a twin-screw extruder with a membrane) as of Example 2 in a more detail.

## Claims

1. A continuous method for removing a solvent from a suspension or solution comprising a target polymer, wherein the method comprises the following steps:
(i) delivering said suspension or solution to an extruder, wherein said extruder comprises a size classification unit that is designed to be permeable for the solvent and impermeable for the target polymer; and
(ii) filtration and extrusion of said suspension or solution in said extruder.

2. The method according to claim 1, wherein the size classification unit is a membrane or sieve.

3. The method according to claim 1 or 2, wherein the extruder further comprises a degassing unit.

4. Method according to claim 3, wherein the degassing unit is used for essentially complete degassing of the target polymer in solution or suspension, wherein essentially complete degassing means that ≤ 1 wt% (≤ 10000 ppm), preferably ≤ 0.1 wt% (≤ 1000 ppm) of solvent is present after the essentially complete degassing.

5. The method according to any one of claims 1 to 4, wherein the filtration of said suspension or solution is performed during extrusion and/or degassing in said extruder comprising the classification unit.

6. The method according to any one of claims 1 to 5, wherein the extruder comprises an inner and an outer enclosure, wherein the inner enclosure further comprises a size classification unit that is impermeable to the target polymer and therefore allows the solvent to exit the inner enclosure and the target polymer to remain inside the inner enclosure, thereby allowing filtration of the suspension or solution through said size classification unit in the extruder.

7. The method according to any one of claims 1 to 6, wherein up to 5%, preferably up to 10%, more preferably up to 20%, more preferably up to 30%, more preferably up to 40%, even more preferably up to 50%, most preferably up to 60% of solvent is removed from said solution or suspension .

8. The method according to claim 2 , wherein the membrane or sieve is designed to be impermeable for target polymers with an average molecular mass of 1000 kDa or more, in particular target polymers with an average molecular mass of 500 kDa or more, in particular preferred target polymers with an average molecular mass of 200 kDa or more.

9. The method according to claim 2 or 8, wherein the size classification unit is a membrane, and wherein a material of the membrane is selected from a group consisting of polyamide membrane, polyvinylidene difluoride membrane, polyethersulfone membrane, polysulfone membrane, polydimethylsiloxane membrane, polypropylene membrane, or a combination thereof.

10. The method according to claim 2 or 8, wherein the size classification unit is a sieve, wherein the sieve is made of a material comprising metal and/or ceramics.

11. The method according to any one of claims 1 to 10, wherein the filtration is driven by a pressure differential across the size classification unit, wherein the pressure differential is > 30 bar, preferably > 50 bar, most preferred > 100 bar.

12. The method according to claim 11, wherein the pressure differential is achieved by a vacuum pumping system aided with heating, wherein heating refers to a temperature not exceeding a maximal temperature of 5K, particularly 10K below the boiling point of the solvent, or the solvent with the lowest boiling point in a mixture of solvents.

13. The method according to any one of claims 1 to 12, wherein the target polymer is a thermoplastic target polymer.

14. The method according to any one of claims 1 to 13, wherein the target polymer is selected from the group comprising polyolefins, polyamide (PA) and combinations thereof.

15. The method according to any one of claims 1 to 14, wherein the method is for recycling plastic waste and is carried out in a plastic waste recycling plant.

16. Plastic waste recycling plant, in particular for implementing the method according to any of claims 1 to 15, comprising the following stations:
a) a station that comprises a downsizing device for plastic waste, that optionally is a cutting or shredding device for plastic waste, and optionally a plastic particle size classification device for classifying the downsized plastic waste;
b) optionally a station for washing the downsized, optionally classified plastic waste produced in station a);
c) a station that comprises a vessel, wherein the vessel comprises an agitator and/or a heating system and/or an organic solvent for dissolving the at least one target polymer derived from the downsized, optionally classified plastic waste produced in station a), or the optionally washed plastic waste produced in station b);
d) optionally a station that comprises a centrifuge for solid-liquid separation;
e) a station comprising an extruder with a size classification unit, wherein the size classification unit is permeable for the solvent and impermeable for the target polymer, and wherein the extruder with size classification unit is used for size classification and extrusion of the target polymer, wherein the extruder comprises a degassing unit and optionally a heating unit, wherein said extruder optionally produces plastic pellets;
wherein the plastic waste recycling plant has a transfer system that transfers materials from each station to the next in the above listed order.
